# EUROPEAN PATENT SPECIFICATION

(11) **EP 2 306 870 B1**
(45) Date of publication and mention of the grant of the patent: **29.05.2013**
(21) Application number: 09768636.4
(22) Date of filing: 26.06.2009
(51) Int. Cl.: A47J 27/00, A47J 31/00, A47J 36/00, A47J 27/21

(54) **KETTLE AND BASE**
KESSEL UND SOCKEL
BOUILLOIRE ET BASE

(30) Priority: 26.06.2008 AU 2008903249
(43) Date of publication of application: 13.04.2011
(73) Proprietor: Breville PTY Limited, Botany, NSW 2019 (AU)
(72) Inventor: COHEN, Paul, Watsons Bay, NSW 2030 (AU); ROSE, Vyvyan, North Bondi, NSW 2026 (AU); EDMONDS, Nicholas, Botany, NSW 2019 (AU)
(74) Representative: Williams, Ceili
(86) International application number: PCT/AU2009/000828
(87) International publication number: WO 2009/155663

(56) References cited:
- WO-A1-2008/031253
- WO-A1-2008/144805
- WO-A2-01/28294
- FR-A1- 2 766 691
- GB-A- 2 347 408
- JP-A- 2000 070 129

## Description

### Field of the Invention

The invention pertains to cordless kettles and more particularly to a cordless kettle with various temperature settings and other enhancements.

### Background of the Invention

A conventional electric kettle, once activated by a user, will boil its contents and then cease operation. However, the growing popularity of tea brewing and sophistication of its Western consumers indicates a need for a kettle that is adapted to deliver water at a variety of distinct temperatures, including boiling.

The western tea drinking consumer is also desirous of acquiring a kitchen appliance with enhanced aesthetic and performance features.

Data communication between the base and cordless kettle are disclosed in the applicant's co-pending PCT Application No. PCT/AU2008/000724 incorporated here by reference. Construction of a kettle with lid damper is disclosed in the applicant's Australian Provisional Application No. 2004902070, incorporated here by reference. WO 01/28294 discloses a kettle with a user control panel on the base. By cycling through a menu of options, indicated on a display, a user can select, among other things, a temperature to which water in the kettle is heated.

The present invention provides improvements that contribute to the aesthetic, ergonomic and functional attributes of a kettle or other device that generates hot water or steam.

### Objects and Summary of the Invention

In one embodiment of the invention, a kettle further comprises a lid having inner and outer lenses between which is void.

In some preferred embodiments of the invention, the kettle further comprises a heating element having a pair of cold pins. An LED light that is used to illuminate the interior of the kettle is located adjacent to the cold pins.

There is also provided, a combination of cordless kettle and base, the base having within it a processor for responding to information originating from the kettle, the processor adapted to respond to user inputs and to effect power control over the kettle. The base has a plurality of discrete temperature selection control switches and an on-off switch, an input from a temperature control switch and then subsequently the on-off switch being required to cause the power to be supplied to effect power control over the kettle.

### Brief Description of the Drawing Figures

In order that the invention be better understood, reference is now made to the following drawing figures in which:
- Figure 1: is a perspective view of a cordless kettle and base in accordance with the teachings of the present invention;
- Figure 2: is a plan view of kettle base and control;
- Figure 3: is a perspective view of underside of kettle lid;
- Figure 4: is a cross section view of kettle lid;
- Figure 5: is a perspective view of kettle vessel showing filter in situation;
- Figure 6: is a perspective view of pour filter;
- Figure 7: is an underside view of kettle base and element; and
- Figure 8: is a cross section view of a vessel body.

### Best Mode and Other Embodiments

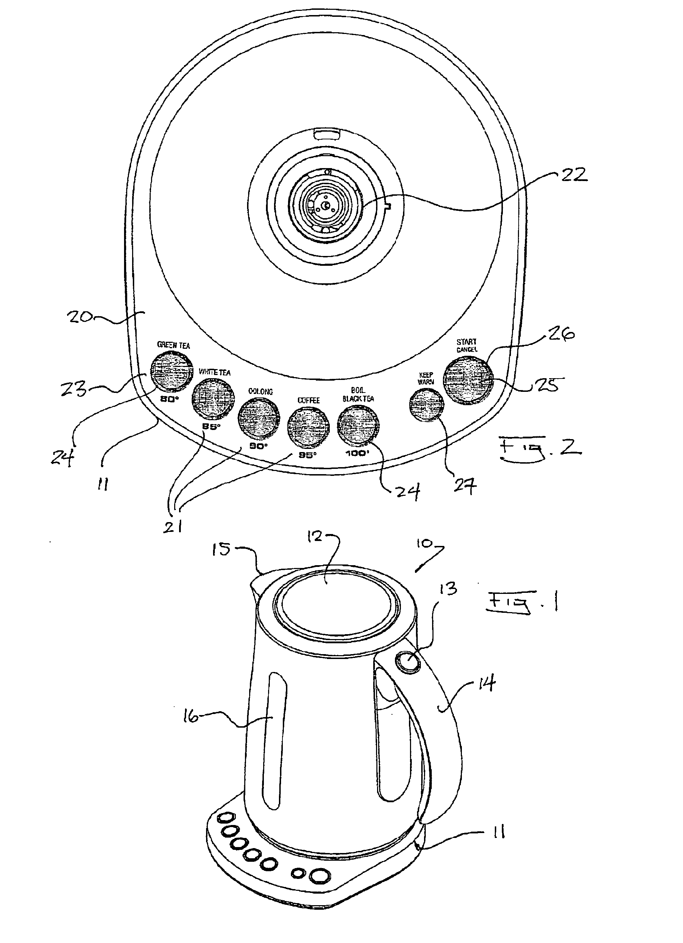

As shown in Figure 1, a cordless kettle 10 has a base 11. The base 11 is connectable to a mains power outlet and operates, when the kettle and base are attached to one another, to control the operation of the kettle and provide the user with convenient controls and feedback concerning the operation of the kettle. Data communication between the base and cordless kettle are disclosed in the applicant's co-pending PCT Application No. PCT/AU2008/000724 incorporated here by reference. Construction of a kettle with lid damper is disclosed in the applicant's Australian Provisional Application No. 2004902070, incorporated here by reference.

In the example of Figure 1, the kettle 10 further comprises a hinged and transparent lid 12 that is operated by a thumb button 13 located on an upper extent of the kettle's handle 14. The kettle has a pouring spout 15 and a transparent view window 16. As will be explained, the interior of the kettle is illuminated and light (such as coloured light) is visible both through the view window 16 and the transparent lid 12.

As shown in Figure 2, an upper surface 20 of the base 11 presents the user with a variety of buttons, switches or controls 21. A multi-pole electrical coupling 22 connects with a cooperating coupling located on an underside of the kettle 10. The coupling 22 transmits power and optionally, control signals to the kettle and may optionally receive data communication signals from the kettle, for example regarding the temperature of the water in the kettle. In this example, the temperature related user controls are five in number. Each control in this example comprises a button that is surrounded by a selectively illuminated ring 24. Any other visual indicator or display may be used in place of the illuminated ring 24. From left to right with respect to Figure 2, a first user control 23 is marked e.g. "green tea" and corresponds with a final water temperature of 80 degrees Celsius ("□C"). A second user control is marked "white tea" and is also marked with a final water temperature of 85□C. A third button is marked "oolong" and is marked with a final water temperature of 90□C. A fourth user control is marked "coffee" and with a final water temperature of 95□C. A fifth user control is marked "boil/black tea" and is marked with a final water temperature of 100□C. Selection or activation of any of the aforementioned temperature controls will cause the device's processor to select a water heating cycle. In addition to the five temperature controls, the base is also provided with a start/cancel control 25. The start/cancel control also has an illuminated ring 26 or other graphic indicator.

As previously mentioned, the heating cycle begins with a user selection that is first input through the temperature controls 24. Subsequent depression of the start/cancel control 25 results in power being supplied to the kettle's heating coil and a simultaneous illumination of the indicator ring 26 (or other graphic indicator) associated with the start/cancel control 25. after a use of the start/cancel control 25, the water in the kettle will be heated to the user selected temperature whereupon the kettle's thermostatic control will provide feedback that causes a disabling of the kettle's heating element. This may be done, for example, by having the kettle's internal thermostat in communication with a processor located in the base 11. A subsequent user activation of the start/cancel control 25 during a heating cycle will cause the cycle to be terminated. Ergonomically, it is preferred that the inception and the cancellation of a heating cycle be conducted from the same user control 25 rather than, for example, having the user input a cancellation through one of the five individual temperature control buttons 28. In addition to the aforementioned controls, the base of the kettle also provides a "keep warm" button 27 that, if used during a heating cycle, will cause the device's processor to cooperate with the power supply and heating element to maintain the water in the kettle at either the last selected temperature for a set time, such as 20 minutes.

In preferred embodiments, the illuminated ring 26 or other graphic indicator associated with the start/cancel button 25 preferably changes colour so that it is a different colour (such as red) during a heating cycle that at any other time, a green ring 26 indicating that the unit is plugged in. This provides additional feedback to the user regarding which button to press when a cancellation of a cycle is required. In preferred embodiments, the rings 24 of the temperature selection controls are not illuminated until a selection has been made. Thus, the user knows what temperature has been selected because only that button's ring 24 or indicator is illuminated. It is also preferred that a user can re-select or change the final water temperature without use of the start/cancel control 25, simply by operating a different temperature control 23 to the one previously selected. In selected embodiments, the device will default to the last temperature selected so that if a particular temperature is regularly used, the user or operator need only activate the start/cancel control 25. When this is done, the last selected temperature will be indicated by the illumination of its ring 24 or other graphic indicator. The illumination ring 24 or other graphic indicator associated with a temperature selection control 23 may flash to indicate that the kettle is in a heating cycle. When the selected temperature is reached, the illumination ring 24 or other graphic device associated with a temperature control 23 is lit continuously (not flashing). The appropriate illumination ring 24 or other graphic device will stay in this continuous illumination mode for a predetermined amount of time, for example, one minute.

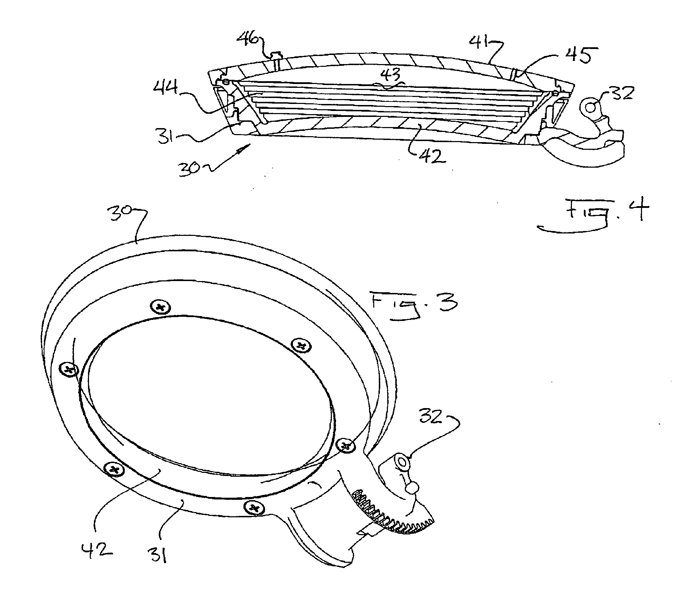

As shown in Figure 3, the kettle's lid 30 comprises an annular or ringshaped frame 31 having a hinge component 32 for attaching the lid to the kettle's body. As shown in Figure 4, the lid 30 is characterised by an upper lens 41 and a lower lens 42. This provides a large clear window that is cool to the touch. In this example, the lenses are lightly tinted and curved or domed away from the interior of the kettle. The curvature of the upper and lower lenses is similar. The upper lens 41 is generally flush with the surrounding portion of the frame 30. To combat condensation, the upper lens may be provided with a small vent 45 or one-way or check valve 46 leading into the interior space 43. The vent 45 is preferably small enough that capillary forces resist the inflow of liquids into the interior space 43. The lower lens 42 may also be flush with the lower surface of the frame 31. In preferred embodiments, the void or interior space 43 between the upper and lower lenses 41, 42 may be filled with an inert gas or dehumidified air so that the interior may be kept dry and free from condensation. In the example depicted in Figure 4, the internal periphery of the void 43 further comprises a ring-like liner 44. The inside surface of the liner 44 is formed as a series of concentric, ascending steps. Light reflecting from the individual steps creates an aesthetically pleasing illusion of depth and serves as a means of indicating that the device is plugged in, by better reflecting the kettle's internal illumination through the upper lens 41.

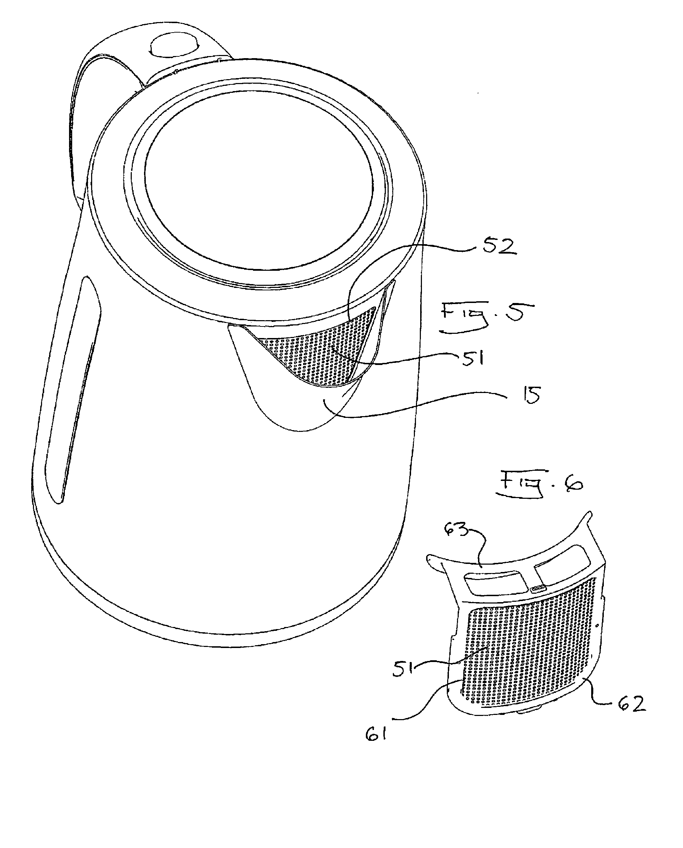

As shown in Figure 5, water being poured through the kettle's spout 15 first passes through a pour filter 51. As with prior art pour filter's, the filter covers, from the inside of the kettle, the entirety of the pour opening 52. However, unlike other electric full size kettles the pour screen 51 is not blocked or occluded by the conventional kind of bracing that is used to support the pour filter. As shown in Figure 6, the pour filter 51 is continuous and unobstructed and supported only about its periphery 61 by a moulded polymeric frame 62 having no cross pieces or bracing that would obstruct the pour opening 52. In preferred embodiments, the pour filter 51 is a thin perforated metal screen. The polymeric frame 62 may include a finger grip portion 63 that extends away from the filter 51, making it easier for the user to remove and reinsert the filter, as required. Thus, the filter 51 is considered unobstructed.

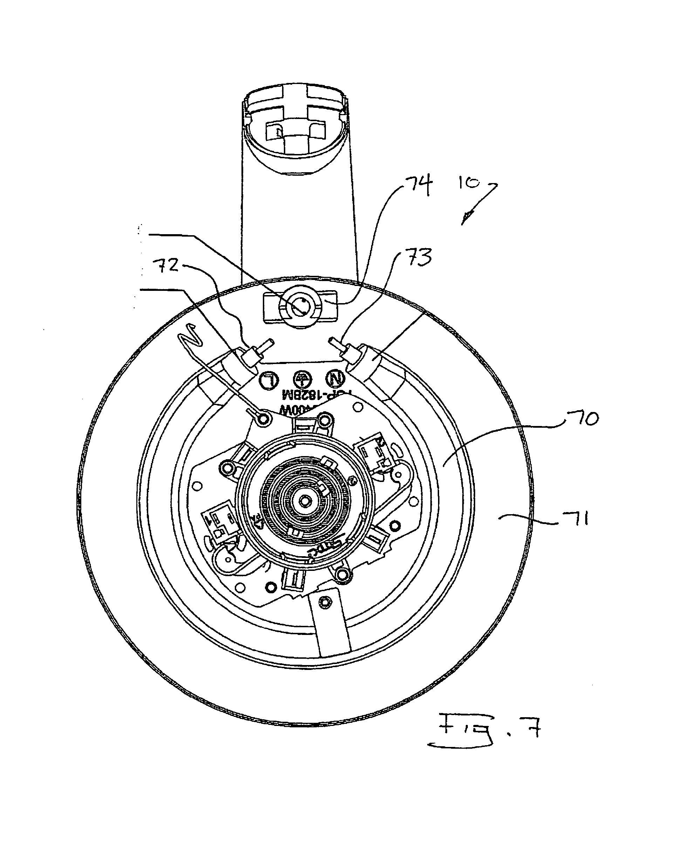

As show in Figure 7, a heating element 70 is located adjacent to the floor 71 of the internal fluid compartment of the kettle 10. The bare ends of the heating element 70 comprise cold pins 72, 73. The cold pins are the least hot portions of the element 70. The floor 71 also supports an LED illuminator 74 that is able to transmit light into the reservoir or internal compartment of the kettle through a transparent (or translucent) cover. To minimise heat damage and degradation to the LED illuminator 74, it is located adjacent to the cold pins 72, 73 and preferably equally spaced from each of the cold pins 72, 73.

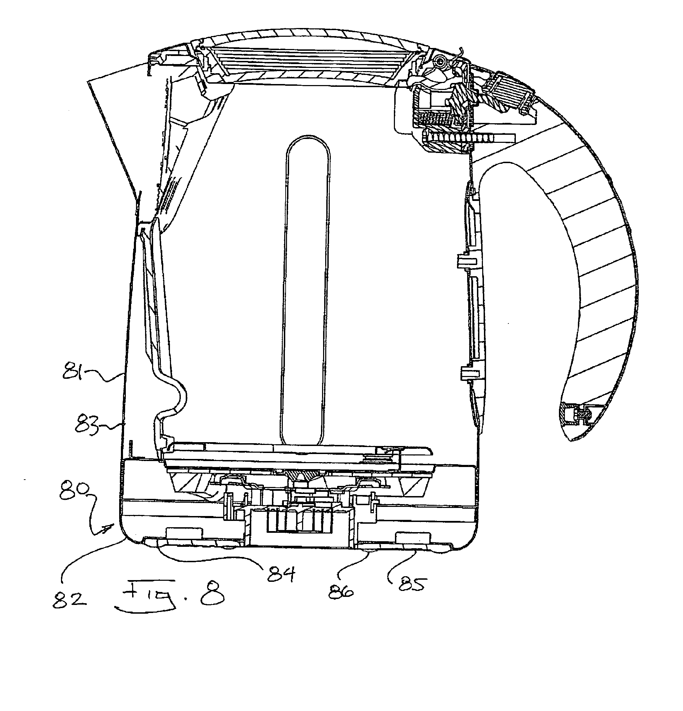

As shown in Figure 8, the lower extremity 80 of the one piece metallic kettle body 81 is strengthened by providing a continuous and smoothly radiused corner 82 that extends between the side wall 83 of the kettle body and a generally flat underside 84. The radiused continuity between the side wall 83 and the underside 84 can be achieved, for example, by roll forming the body's metal structure in the area of the lower extremity 80. In preferred embodiments, the underside 84 is stepped to receive a polymeric disk-like insert 85 that incorporates the feet 86 upon which the kettle rests.

While the present invention has been disclosed with reference to particular details of construction, these should be understood as having been provided by way of example and not as limitations to the scope or spirit of the invention.

## Claims

1. A device for heating a liquid that it contains, the device being a combination of a cordless kettle (10)and a base (11), the base having within it a power supply to the kettle and a processor for responding to information originating from the kettle, the processor adapted to respond to user inputs and to effect power control over the kettle, wherein
the base also has a plurality of discrete temperature selection control switches (21) and an on-off switch (25), a first input from a selected temperature control switch and then subsequently a second input from the on-off switch being required to cause power to be supplied to a heating element (70) in the kettle, **characterised in that**
each of the discrete control switches is operatively associated with a respective individual pre-determined temperature selection, and the power supplied to the heating element causes liquid within the kettle (10) to be heated to the individual temperature selection associated with the selected temperature control switch.

2. The device according to claim 1, wherein:
a multi-pole electrical coupling (22) connects with a cooperating coupling located on an underside of the kettle, and the coupling transmits power to the kettle and receives data communication signals from the kettle regarding the temperature of the liquid in the kettle.

3. The device according to claim 1 or claim 2 , wherein:
each discrete temperature selection control switch (21) being associated with an illuminated indicator (26) that indicates that a switch has been selected.

4. The device according to any one of the preceding claims, wherein:
a subsequent user selection of the on-off switch (25) during a heating cycle will cause the cycle to be terminated.

5. The device according to any one of the preceding claims, wherein:
the base (11) also provides a "keep warm" switch (27) that, if used during a heating cycle, will cause the device's processor to cooperate with the power supply and the heating element (70) to maintain the liquid in the kettle at a last selected temperature.

6. The device according to any one of the preceding claims, wherein:
an indicator (26) associated with the on-off switch changes appearance so that it is a different appearance during a heating cycle than at any other time, thus providing feedback regarding which button to press when a cancellation of a cycle is required.

7. The device according to claim 3 or any one of claims 4 - 6 when dependent thereon, wherein:
the processor will effect power control such that the device will default to a last temperature selected, the last selected temperature being indicated by illumination of the indicator (26), the indicator flashing to indicate that the kettle (10) is in a heating cycle and the indicator being illuminated continuously when a selected temperature is reached.

8. The device according to any one of the preceding claims, wherein:
a discrete temperature selection control switch (21) will indicate that it has been selected when a new temperature selection is made by a user during a previously selected heating cycle.

9. The device according to any one of the preceding claims, wherein:
the base (11) also provides a "keep warm" switch (27) that, if used before or after a heating cycle, will cause the device's processor to cooperate with the power supply and heating element (70) to maintain the liquid in the kettle at a last selected temperature.

10. The device according to any one of the preceding claims 1 to 8, wherein:
the base (11) also provides a "keep warm" switch (27) that will cause the device's processor to cooperate with the power supply and heating element (70) to maintain the liquid in the kettle at a selected temperature for a set period of time.

11. The device according to claim 1, wherein:
each discrete temperature selection control switch (21) has an illuminated indicator (26) that indicates that a switch has been selected by a user;
the base (11) providing a "keep warm" switch (27) with a "keep warm" switch indicator that, if used during a heating cycle, will cause the device's processor to cooperate with the power supply and heating element (70) to maintain the contents at a last selected temperature.

12. The device according to claim 11, wherein:
an indicator (26) associated with the on-off switch (25) changes appearance so that it is a different appearance during a heating cycle than at any other time, thus providing feedback regarding which button to press when a cancellation of a cycle is required.

13. The device according to claim 11, wherein:
the processor will effect power control such that the device will default to a last temperature selected, the last selected temperature being indicated by illumination of the indicator (26), that indicator flashing to indicate that the kettle (10) is in a heating cycle and that indicator being illuminated continuously when a selected temperature is reached.

14. The device according to claim 11, wherein:
the base (11) also provides a "keep warm" switch (27) that, if used before a heating cycle, will cause the device's processor to cooperate with the power supply and heating element (70) to maintain the liquid in the kettle at a last selected temperature.

15. The device according to any one of the preceding claims wherein the device has a plurality of user-selectable temperature settings each setting being defined by a separate one of the discrete control switches.

## Patentansprüche

1. Gerät zum Erhitzen einer darin enthaltenen Flüssigkeit, wobei es sich bei dem Gerät um eine Kombination aus einem kabellosen Kessel (10) und einer Basis (11) handelt, wobei in der Basis ein Netzteil für den Kessel sowie ein Prozessor zum Reagieren auf Informationen, die von dem Kessel stammen, enthalten sind, wobei der Prozessor so eingerichtet ist, dass er auf Benutzereingaben reagiert und die Stromversorgungssteuerung für den Kessel bewirkt, wobei
die Basis außerdem über eine Mehrzahl von eigenständigen Temperaturauswahl-Steuerschaltern (21) und einen Ein-/Aus-Schalter (25) verfügt, eine erste Eingabe von einem ausgewählten Temperatur-Steuerschalter und dann nachfolgend eine zweite Eingabe von dem Ein-/Aus-Schalter erforderlich sind, um die Stromversorgung eines Heizelements (70) in dem Kessel zu bewirken; **dadurch gekennzeichnet, dass**
jedem der eigenständigen Steuerschalter operativ eine jeweilige individuelle vorgegebene Temperaturauswahl zugeordnet ist und die Stromversorgung des Heizelements bewirkt, dass die Flüssigkeit in dem Kessel (10) auf die individuelle Temperaturauswahl erhitzt wird, die dem ausgewählten Temperatur-Steuerschalter zugeordnet ist.

2. Gerät gemäß Anspruch 1, wobei:
ein mehrpoliger elektrischer Anschluss (22) mit einem dazu passenden Anschluss verbunden wird, der sich auf einer Unterseite des Kessels befindet, und der Anschluss Strom zum Kessel überträgt und Datenkommunikationssignale von dem Kessel in Bezug auf die Temperatur der Flüssigkeit im Kessel empfängt.

3. Gerät gemäß Anspruch 1 oder Anspruch 2, wobei:
jeder eigenständige Temperaturauswahl-Steuerschalter (21) einer beleuchteten Anzeige (26) zugeordnet ist, welche anzeigt, dass ein Schalter ausgewählt wurde.

4. Gerät gemäß einem der vorherigen Ansprüche, wobei:
eine nachfolgende Benutzerauswahl des Ein-/Aus-Schalters (25) während eines Heizzyklus einen Abbruch des Heizzyklus bewirkt.

5. Gerät gemäß einem der vorherigen Ansprüche, wobei:
die Basis (11) außerdem einen "Warmhalten"-Schalter (27) enthält, der im Falle seiner Betätigung während eines Heizzyklus bewirkt, dass der Prozessor des Geräts mit der Stromversorgung und dem Heizelement (70) zusammenwirkt, um die Flüssigkeit in dem Kessel auf einer zuletzt ausgewählten Temperatur zu halten.

6. Gerät gemäß einem der vorherigen Ansprüche, wobei:
eine dem Ein-/Aus-Schalter zugeordnete Anzeige (26) ihr Erscheinungsbild ändert, so dass sie während eines Heizzyklus ein anderes Erscheinungsbild zeigt als zu allen anderen Zeiten, wodurch eine Rückmeldung dahingehend geliefert wird, welche Taste zu drücken ist, wenn ein Abbruch eines Zyklus erforderlich ist.

7. Gerät gemäß Anspruch 3 oder einem der Ansprüche 4 - 6 bei Abhängigkeit von diesen, wobei:
der Prozessor die Stromversorgungssteuerung so bewirkt, dass das Gerät standardmäßig eine zuletzt ausgewählte Temperatur verwendet, wobei die zuletzt ausgewählte Temperatur durch Aufleuchten der Anzeige (26) angezeigt wird, die Anzeige blinkt, um anzuzeigen, dass sich der Kessel (10) in einem Heizzyklus befindet, und die Anzeige dauerhaft leuchtet, wenn eine ausgewählte Temperatur erreicht ist.

8. Gerät gemäß einem der vorherigen Ansprüche, wobei:
ein eigenständiger Temperaturauswahl-Steuerschalter (21) anzeigt, dass er ausgewählt wurde, wenn durch einen Benutzer während eines zuvor ausgewählten Heizzyklus eine neue Temperaturauswahl erfolgt.

9. Gerät gemäß einem der vorherigen Ansprüche, wobei:
die Basis (11) außerdem einen "Warmhalten"-Schalter (27) enthält, der im Falle seiner Betätigung vor oder nach einem Heizzyklus bewirkt, dass der Prozessor des Geräts mit der Stromversorgung und dem Heizelement (70) zusammenwirkt, um die Flüssigkeit in dem Kessel auf einer zuletzt ausgewählten Temperatur zu halten.

10. Gerät gemäß einem der vorherigen Ansprüche 1 bis 8, wobei:
die Basis (11) außerdem einen "Warmhalten"-Schalter (27) enthält, der bewirkt, dass der Prozessor des Geräts mit der Stromversorgung und dem Heizelement (70) zusammenwirkt, um die Flüssigkeit in dem Kessel für eine vorgegebene Zeitdauer auf einer ausgewählten Temperatur zu halten.

11. Gerät gemäß Anspruch 1, wobei:
jeder eigenständige Temperaturauswahl-Steuerschalter (21) über eine beleuchtete Anzeige (26) verfügt, welche anzeigt, dass ein Schalter durch einen Benutzer ausgewählt wurde;
die Basis (11) einen "Warmhalten"-Schalter (27) mit einer "Warmhalten"-Schalteranzeige enthält, der im Falle seiner Betätigung während eines Heizzyklus bewirkt, dass der Prozessor des Geräts mit der Stromversorgung und dem Heizelement (70) zusammenwirkt, um den Inhalt auf einer zuletzt ausgewählten Temperatur zu halten.

12. Gerät gemäß Anspruch 11, wobei:
eine dem Ein-/Aus-Schalter (25) zugeordnete Anzeige (26) ihr Erscheinungsbild ändert, so dass sie während eines Heizzyklus ein anderes Erscheinungsbild zeigt als zu allen anderen Zeiten, wodurch eine Rückmeldung dahingehend geliefert wird, welche Taste zu drücken ist, wenn ein Abbruch eines Zyklus erforderlich ist.

13. Gerät gemäß Anspruch 11, wobei:
der Prozessor die Stromversorgungssteuerung so bewirkt, dass das Gerät standardmäßig eine zuletzt ausgewählte Temperatur verwendet, wobei die zuletzt ausgewählte Temperatur durch Aufleuchten der Anzeige (26) angezeigt wird, wobei diese Anzeige blinkt, um anzuzeigen, dass sich der Kessel (10) in einem Heizzyklus befindet, und diese Anzeige dauerhaft leuchtet, wenn eine ausgewählte Temperatur erreicht ist.

14. Gerät gemäß Anspruch 11, wobei:
die Basis (11) außerdem einen "Warmhalten"-Schalter (27) enthält, der im Falle seiner Betätigung vor einem Heizzyklus bewirkt, dass der Prozessor des Geräts mit der Stromversorgung und dem Heizelement (70) zusammenwirkt, um die Flüssigkeit in dem Kessel auf einer zuletzt ausgewählten Temperatur zu halten.

15. Gerät gemäß einem der vorherigen Ansprüche, wobei das Gerät über eine Mehrzahl von durch den Benutzer auswählbaren Temperatureinstellungen verfügt, wobei jede Einstellung durch einen separaten der eigenständigen Steuerschalter definiert ist.

## Revendications

1. Un dispositif pour chauffer un liquide qu'il contient, le dispositif étant une combinaison d'une bouilloire sans fil (10) et d'une base (11), la base ayant à l'intérieur d'elle une alimentation en énergie vers la bouilloire et un processeur pour répondre à des informations provenant de la bouilloire, le processeur étant conçu pour répondre à des entrées d'utilisateur et pour effectuer une commande d'énergie sur la bouilloire, dans lequel la base a également une pluralité de commutateurs de commande de sélection de température discrets (21) et un commutateur marche-arrêt (25), une première entrée provenant d'un commutateur de commande de température sélectionné et ensuite ultérieurement une deuxième entrée provenant du commutateur marche-arrêt étant requise pour amener l'énergie à être fournie à un élément de chauffage (70) dans la bouilloire, **caractérisée en ce que** chacun des commutateurs de commande discrets est associé de façon opérante à une sélection de température prédéterminée individuelle respective, et l'énergie fournie à l'élément de chauffage amène le liquide à l'intérieur de la bouilloire (10) à être chauffé à la sélection de température individuelle associée au commutateur de commande de température sélectionné.

2. Le dispositif selon la revendication 1, dans lequel :
un couplage électrique multipolaire (22) se connecte à un couplage coopérant situé sur un dessous de la bouilloire, et le couplage transmet de l'énergie à la bouilloire et reçoit des signaux de communication de données de la bouilloire concernant la température du liquide dans la bouilloire.

3. Le dispositif selon la revendication 1 ou la revendication 2, dans lequel :
chaque commutateur de commande de sélection de température discret (21) étant associé à un indicateur illuminé (26) qui indique qu'un commutateur a été sélectionné.

4. Le dispositif selon n'importe laquelle des revendications précédentes, dans lequel :
une sélection d'utilisateur ultérieure du commutateur marche-arrêt (25) durant un cycle de chauffage amènera le cycle à être terminé.

5. Le dispositif selon n'importe laquelle des revendications précédentes, dans lequel :
la base (11) fournit également un commutateur « garder chaud » (27) qui, s'il est utilisé durant un cycle de chauffage, amènera le processeur du dispositif à coopérer avec l'alimentation en énergie et l'élément de chauffage (70) pour maintenir le liquide dans la bouilloire à une dernière température sélectionnée.

6. Le dispositif selon n'importe laquelle des revendications précédentes, dans lequel :
un indicateur (26) associé au commutateur marche-arrêt change d'apparence de telle sorte qu'il soit d'une apparence différente durant un cycle de chauffage qu'à n'importe quel autre moment, fournissant ainsi un retour d'information concernant le bouton sur lequel appuyer quand une annulation d'un cycle est requise.

7. Le dispositif selon la revendication 3 ou n'importe laquelle des revendications 4 à 6 lorsque dépendantes de cette dernière, dans lequel :
le processeur effectuera une commande d'énergie de telle sorte que le dispositif se positionnera par défaut sur une dernière température sélectionnée, la dernière température sélectionnée étant indiquée par l'illumination de l'indicateur (26), l'indicateur clignotant pour indiquer que la bouilloire (10) est dans un cycle de chauffage et l'indicateur étant illuminé de façon continue quand une température sélectionnée est atteinte.

8. Le dispositif selon n'importe laquelle des revendications précédentes, dans lequel :
un commutateur de commande de sélection de température discret (21) indiquera qu'il a été sélectionné quand une nouvelle sélection de température est faite par un utilisateur durant un cycle de chauffage précédemment sélectionné.

9. Le dispositif selon n'importe laquelle des revendications précédentes, dans lequel :
la base (11) fournit également un commutateur « garder chaud » (27) qui, s'il est utilisé avant ou après un cycle de chauffage, amènera le processeur du dispositif à coopérer avec l'alimentation en énergie et l'élément de chauffage (70) pour maintenir le liquide dans la bouilloire à une dernière température sélectionnée.

10. Le dispositif selon n'importe laquelle des revendications précédentes 1 à 8, dans lequel :
la base (11) fournit également un commutateur « garder chaud » (27) qui amènera le processeur du dispositif à coopérer avec l'alimentation en énergie et l'élément de chauffage (70) pour maintenir le liquide dans la bouilloire à une température sélectionnée pendant une période de temps déterminée.

11. Le dispositif selon la revendication 1, dans lequel :
chaque commutateur de commande de sélection de température discret (21) a un indicateur illuminé (26) qui indique qu'un commutateur a été sélectionné par un utilisateur ;
la base (11) fournissant un commutateur « garder chaud » (27) avec un indicateur de commutateur « garder chaud » qui, s'il est utilisé durant un cycle de chauffage, amènera le processeur du dispositif à coopérer avec l'alimentation en énergie et l'élément de chauffage (70) pour maintenir le contenu à une dernière température sélectionnée.

12. Le dispositif selon la revendication 11, dans lequel :
un indicateur (26) associé au commutateur marche-arrêt (25) change d'apparence de telle sorte qu'il soit d'une apparence différente durant un cycle de chauffage qu'à n'importe quel autre moment, fournissant ainsi un retour d'information concernant le bouton sur lequel appuyer quand une annulation d'un cycle est requise.

13. Le dispositif selon la revendication 11, dans lequel :
le processeur effectuera une commande d'énergie de telle sorte que le dispositif se positionnera par défaut sur une dernière température sélectionnée, la dernière température sélectionnée étant indiquée par l'illumination de l'indicateur (26), cet indicateur clignotant pour indiquer que la bouilloire (10) est dans un cycle de chauffage et cet indicateur étant illuminé de façon continue quand une température sélectionnée est atteinte.

14. Le dispositif selon la revendication 11, dans lequel :
la base (11) fournit également un commutateur « garder chaud » (27) qui, s'il est utilisé avant un cycle de chauffage, amènera le processeur du dispositif à coopérer avec l'alimentation en énergie et l'élément de chauffage (70) pour maintenir le liquide dans la bouilloire à une dernière température sélectionnée.

15. Le dispositif selon n'importe laquelle des revendications précédentes dans lequel le dispositif a une pluralité de réglages de température sélectionnables par l'utilisateur, chaque réglage étant défini par un commutateur distinct parmi les commutateurs de commande discrets.
